# FASCICULE DE BREVET EUROPEEN

(11) **EP 3 351 991 B1**
(45) Date de publication et mention de la délivrance du brevet: **24.08.2022**
(21) Numéro de dépôt: 18150938.1
(22) Date de dépôt: 10.01.2018
(51) Int. Cl.: G02B 19/00, F21V 8/00, F21S 43/14, F21S 43/239, F21S 43/249

(54) **DISPOSITIF D'ÉCLAIRAGE À ZONE D'ALIMENTATION EN PHOTONS LOCALE ET RÉPARTITION DE PHOTONS**
BELEUCHTUNGSVORRICHTUNG MIT LOKALER PHOTONENZUFUHRZONE UND VERTEILUNG VON PHOTONEN
LIGHTING DEVICE WITH LOCAL PHOTON SUPPLY AREA AND PHOTON DISTRIBUTION

(30) Priorité: 19.01.2017 FR 1750399
(43) Date de publication de la demande: 25.07.2018
(73) Titulaire: PSA Automobiles SA, 78300 Poissy (FR)
(72) Inventeur: BORE, MICHAEL, 25420 VOUJEAUCOURT (FR)

(56) Documents cités:
- EP-A1- 1 992 868
- US-A1- 2009 135 621
- US-A1- 2013 163 264

## Description

L'invention concerne les dispositifs d'éclairage, et plus précisément ceux qui comprennent des diodes électroluminescentes alimentant en photons un guide de lumière et qui sont destinés à assurer au moins une fonction photométrique.

On entend ici par « dispositif d'éclairage » un dispositif lumineux pouvant assurer au moins une fonction photométrique d'éclairage ou de signalisation ou d'effet lumineux, éventuellement décoratif.

Dans certains domaines, comme par exemple celui des véhicules, éventuellement de type automobile, on utilise des dispositifs d'éclairage pour produire une bande lumineuse présentant une intensité croissante d'une première extrémité d'une face de sortie à une seconde extrémité (opposée à la première) de cette même face de sortie. C'est par exemple le cas lorsque le dispositif d'éclairage est destiné à assurer une fonction de signalisation de nuit ou de jour (feu de stop, clignotant, feu de recul, feu de position (ou veilleuse ou encore lanterne), ou feu de jour (ou DRL (pour « Daytime running Light (or Lamp) » - signalisation lumineuse allumée automatiquement lorsque le véhicule est mis en fonctionnement pendant le jour))).

Actuellement, ce type de dispositif comprend des diodes électroluminescentes générant des photons et un guide de lumière de type plat et comportant une partie de guidage placée entre des faces d'entrée etde sortie. Ce type de dispositif est notamment connu du document US2013163264A1. Dans ce document, les diodes électroluminescentes sont réparties sur toute la longueur de la face d'entrée, laquelle est propre à alimenter en photons générés la partie de guidage. La face de sortie est propre à délivrer à l'extérieur des photons guidés dans la partie de guidage.

Afin d'obtenir l'intensité lumineuse croissante entre les première et seconde extrémités de la face de sortie deux solutions ont été proposées. Une première solution consiste à utiliser des diodes électroluminescentes fournissant des intensités lumineuses différentes (et plus précisément croissantes), et donc présentant des caractéristiques différentes. Une seconde solution consiste à utiliser des diodes électroluminescentes identiques, mais fournissant des intensités lumineuses variables, et à contrôler au moyen de circuits électroniques l'intensité lumineuse fournie par chaque diode électroluminescente, afin qu'elles délivrent finalement et respectivement des intensités lumineuses croissantes.

La première solution impose une diversité importante de diodes électroluminescentes, et induit une probabilité élevée d'interversion de diodes électroluminescentes au montage et donc une probabilité élevée d'avoir un dispositif lumineux qui ne délivre pas une intensité lumineuse rigoureusement croissante. En outre, cela rend plus complexe la gestion des stocks et l'approvisionnement sur les chaines d'assemblage.

La seconde solution impose l'utilisation de circuits électroniques de contrôle d'intensité, ce qui augmente l'encombrement et les coûts.

De plus, ces deux solutions imposent l'utilisation d'un nombre important de diodes électroluminescentes afin d'alimenter de façon homogène toute la face d'entrée du guide de lumière, ce qui s'avère pénalisant en termes de poids, d'encombrement et de consommation électrique, et multiplie les possibilités de panne. En outre, cela impose une configuration spécifique de l'intégralité de la face d'entrée pour la réception et l'injection des photons.

L'invention a donc notamment pour but d'améliorer la situation.

Elle propose notamment à cet effet un dispositif d'éclairage dont la définition correspond à celle du document US2013163264A1 et est conforme au préambule de la revendication 1.

Ce dispositif d'éclairage se caractérise par la partie caractérisante de la revendication 1.

Grâce à cette utilisation d'une partie des photons pénétrant par une zone d'alimentation locale de la face d'entrée pour alimenter une seconde zone de sortie de la face de sortie, on obtient avantageusement une intensité lumineuse qui décroit à partir de la première zone de sortie située en face de cette zone d'alimentation, sans qu'il faille utiliser des diodes électroluminescentes différentes ou des circuits électroniques de contrôle d'intensité. En outre, on réduit très notablement le nombre de diodes électroluminescentes utilisées.

Le dispositif d'éclairage selon l'invention peut comporter d'autres caractéristiques qui peuvent être prises séparément ou en combinaison, et notamment :
- au moins deux des zones d'entrée peuvent être agencées pour répartir les photons qu'elles reçoivent dans des secteurs angulaires prédéfinis différents, une zone d'entrée, située à une extrémité d'une zone d'alimentation, elle-même située en regard d'une extrémité d'une première zone de sortie située à côté d'une seconde zone de sortie, offrant une répartition dans un secteur angulaire qui est plus grand que le secteur angulaire de la zone d'entrée voisine ;
- les secteurs angulaires prédéfinis peuvent être propres à induire une intensité maximale constante au niveau de la première zone de sortie ;
- l'une au moins des première et seconde zones de sortie peut comprendre des facettes propres à éclater en sous-faisceaux un faisceau constitué de photons guidés pour améliorer une homogénéité lumineuse ou concentrer des photons guidés, par exemple pour obtenir des valeurs photométriques difficilement atteignables ;
- l'une au moins des première et seconde zones de sortie peut comprendre un grainage propre à homogénéiser un faisceau constitué des photons délivrés à l'extérieur ;
- les diodes électroluminescentes peuvent être identiques et propres à délivrer une même intensité lumineuse ;
- les diodes électroluminescentes peuvent être de type classique (ou LED) ou de type organique (ou OLED) ;
- le guide de lumière peut être réalisé en polycarbonate (ou PC) ou en poly-méthacrylate de méthyle (ou PMMA).

L'invention propose également un bloc optique de véhicule, éventuellement de type automobile, et comprenant au moins un dispositif d'éclairage du type de celui présenté ci-avant.

L'invention propose également un véhicule, éventuellement de type automobile, et comprenant au moins un dispositif d'éclairage du type de celui présenté ci-avant et/ou au moins un bloc optique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue du dessus, un exemple de bloc optique comprenant un exemple de réalisation d'un dispositif d'éclairage selon l'invention, et
- la figure 2 illustre schématiquement, dans une vue de face, un exemple de bande lumineuse obtenu au moyen du dispositif d'éclairage de la figure 1.

L'invention a notamment pour but de proposer un dispositif d'éclairage DE à diodes électroluminescentes Dj et guide de lumière GL, et propre à définir une bande lumineuse BL d'intensité lumineuse décroissante.

On considère dans ce qui suit, à titre d'exemple non limitatif, que le dispositif d'éclairage DE est destiné à équiper un bloc optique BO d'un véhicule de type automobile, comme par exemple une voiture. Mais l'invention n'est pas limitée à cette application. En effet, un dispositif d'éclairage DE peut être un équipement en soi (comportant éventuellement son propre boîtier), ou bien peut faire partie d'un autre équipement qu'un bloc optique de véhicule. Ainsi, un dispositif d'éclairage DE peut faire partie de n'importe quel véhicule (terrestre, maritime (ou fluvial), ou aérien), de n'importe quelle installation, y compris de type industriel, de n'importe quel appareil (ou système), et de n'importe quel bâtiment.

Par ailleurs, on considère dans ce qui suit, à titre d'exemple non limitatif, que le bloc optique BO (comprenant au moins un dispositif d'éclairage DE) est un feu arrière assurant au moins une fonction photométrique de signalisation, comme par exemple une fonction de feu de recul. Mais l'invention n'est pas limitée à cette application. En effet, le dispositif d'éclairage DE, selon l'invention, est un dispositif lumineux pouvant assurer au moins une fonction photométrique d'éclairage ou de signalisation ou d'effet lumineux, éventuellement décoratif. Ainsi, il peut assurer une fonction de signalisation de nuit ou de jour, comme par exemple une fonction de feu de stop, ou une fonction de clignotant, ou une fonction de feu de position (ou veilleuse ou encore lanterne), ou encore une fonction de feu de jour (ou DRL).

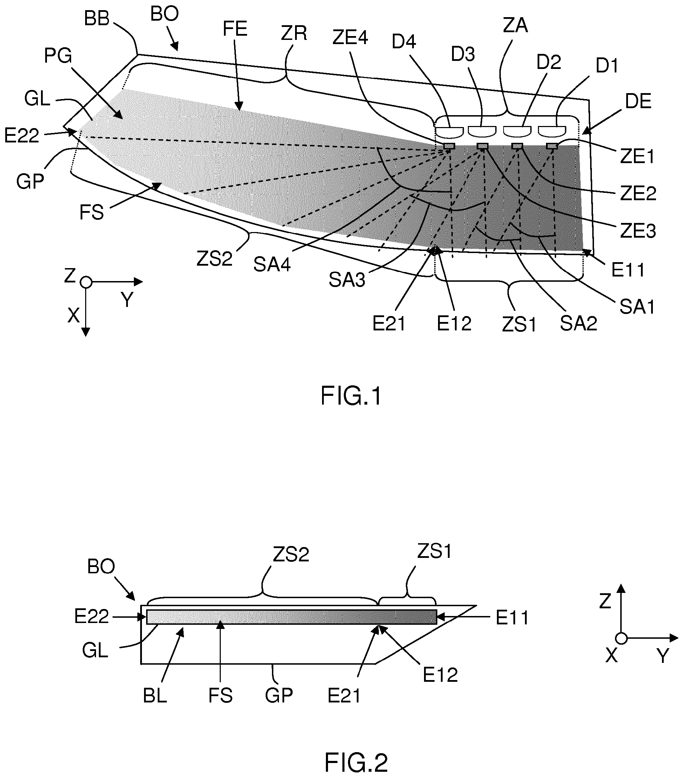

Sur les figures 1 et 2, la direction X est une direction dite longitudinale du fait qu'elle est parallèle à un côté longitudinal d'un véhicule, la direction Y est une direction dite transversale du fait qu'elle est perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur la figure 1, une partie d'un bloc optique BO de véhicule (ici un feu arrière) comprenant un dispositif d'éclairage DE selon l'invention.

Comme illustré, ce bloc optique BO comprend notamment un boîtier BB et une glace de protection GP.

Le boîtier BB est destiné, ici, à être solidarisé à une partie de la carrosserie d'un véhicule (ici dans une partie arrière gauche). Il est réalisé dans un matériau rigide, comme par exemple une matière plastique ou synthétique. Dans ce cas, il peut être réalisé par moulage. Ce boîtier BB délimite une partie d'une cavité logeant un dispositif d'éclairage DE selon l'invention, ainsi que d'éventuels autres moyens d'éclairage assurant au moins une autre fonction photométrique.

Comme illustré sur la figure 1, un dispositif d'éclairage DE, selon l'invention, comprend au moins deux diodes électroluminescentes Dj et un guide de lumière GL.

Chaque diode électroluminescente Dj est propre à générer des photons à destination du guide de lumière GL. Par exemple, chaque diode électroluminescente Dj peut être de type classique. Il s'agit alors de ce que l'on appelle habituellement une LED (« Light-Emitting Diode »)). Mais en variante elle pourrait être de type organique (ou OLED (« Organic Light-Emitting Diode »)).

On notera, bien que cela n'apparaisse pas sur la figure 1, que chaque diode électroluminescente Dj peut, par exemple, être installée sur une plaque de support. Cette plaque de support peut, par exemple, être une carte à circuits imprimés, de type PCB (« Printed Circuit Board »), rigide ou flexible (« de type « Flex »).

Dans l'exemple illustré non limitativement sur la figure 1, le dispositif d'éclairage DE comprend quatre diodes électroluminescentes D1 à D4 (j = 1 à 4). Mais il peut comprendre n'importe quel nombre de diodes électroluminescentes Dj, dès lors que ce nombre est au moins égal à deux. Ainsi, il pourrait comprendre deux ou trois ou cinq diodes électroluminescentes Dj, par exemple.

On notera que les diodes électroluminescentes Dj sont préférentiellement identiques entre elles, et propres à délivrer une même et unique intensité lumineuse. Mais cela n'est pas une obligation.

Le guide de lumière GL est de type plat et comporte une partie de guidage PG placée entre une face d'entrée FE et une face de sortie FS.

Par exemple, le guide de lumière GL peut être réalisé en polycarbonate (ou PC) ou en poly-méthacrylate de méthyle (ou PMMA).

La face d'entrée FE du guide de lumière GL est propre à (ou agencée pour) alimenter en photons générés la partie de guidage PG. La face de sortie FS du guide de lumière GL est propre à (ou agencée pour) délivrer à l'extérieur du guide de lumière GL des photons qui ont été guidés dans la partie de guidage PG.

Comme illustré sur la figure 1, les diodes électroluminescentes Dj sont toutes placées en regard respectivement de zones d'entrée ZEj qui sont définies dans au moins une zone d'alimentation ZA de la face d'entrée FE. Cette zone d'alimentation ZA, locale, est située en regard d'une première zone de sortie ZS1 de la face de sortie FS.

On notera que dans l'exemple illustré non limitativement sur les figures 1 et 2, la face d'entrée FE ne comprend qu'une seule zone d'alimentation ZA, située en regard d'une unique première zone de sortie ZS1 de la face de sortie FS. Mais dans des variantes de réalisation la face d'entrée FE pourrait comprendre N zones d'alimentation ZA distantes les unes des autres, avec N ≥ 2, et situées respectivement en regard de N premières zones de sortie ZS1 de la face de sortie FS, également distantes les unes des autres.

De plus, les zones d'entrée ZEj sont agencées pour répartir les photons, qu'elles reçoivent respectivement des diodes électroluminescentes Dj associées, dans des secteurs angulaires SAj prédéfinis afin d'induire sur une seconde zone de sortie ZS2 de la face de sortie FS, située à côté de la (d'une) première zone de sortie ZS1, une intensité lumineuse qui décroit à partir de la première zone de sortie ZS1.

Ainsi, seule une (petite) partie de la face d'entrée FE sert à l'alimentation en photons de la partie de guidage PG, alors que l'intégralité de la face de sortie FS délivre des photons à l'extérieur grâce à la répartition des photons réalisée par les zones d'entrée ZEj de la zone d'alimentation ZA locale. Cela permet d'obtenir sur la face de sortie FS une bande lumineuse BL dont l'intensité lumineuse décroit à partir de la première zone de sortie ZS1 (voir figure 2). De plus, cela peut permettre d'éviter d'utiliser des diodes électroluminescentes différentes ou bien des diodes électroluminescentes d'intensité lumineuse variable et des circuits électroniques de contrôle d'intensité. En outre, cela permet de réduire très notablement le nombre de diodes électroluminescentes Dj utilisées puisqu'une partie des photons qu'elles génèrent est transférée (par la répartition) vers la seconde zone de sortie ZS2 qui est située en regard d'une zone ZR de la face d'entrée FE qui est située à côté de la zone d'alimentation ZA locale et devant laquelle n'est installée aucune diode électroluminescente.

La bande lumineuse BL offre ainsi un effet de « comète » ou « d'étoile filante », la queue de la comète ou de l'étoile filante étant définie par la seconde zone de sortie ZS2.

Dans l'exemple illustré, la variation d'intensité lumineuse est matérialisée par un dégradé de gris, le gris le plus foncé (à droite) matérialisant l'intensité lumineuse maximale et le gris le plus clair (à gauche) matérialisant l'intensité lumineuse minimale. Mais la couleur de la bande lumineuse BL dépend de la (des) fonction(s) photométrique(s) à assurer, et est définie par la couleur du matériau constituant le guide de lumière GL et/ou la longueur d'onde des photons générés par les diodes électroluminescentes Dj. A titre d'exemple, la couleur de la bande lumineuse BL peut être celle dite cristal blanc. Par ailleurs, la différence entre les intensités lumineuses minimale et maximale dépend notamment du coefficient de transmission du matériau constituant le guide de lumière GL, des dimensions de ce dernier (GL), et des secteurs angulaires SAj.

On comprendra que lorsque la face d'entrée FE ne comprend qu'une seule zone d'alimentation ZA (locale), la face de sortie FS ne comprend qu'une seule seconde zone de sortie ZS2, comme illustré. Mais lorsque la face d'entrée FE comprend N zones d'alimentation ZA, avec N ≥ 2, la face de sortie FS comprend N premières zones de sortie ZS1 situées respectivement en regard des N zones d'alimentation ZA, et N secondes zones de sortie ZS2 placées chacune à côté de l'une des N premières zones de sortie ZS1.

Afin d'assurer la répartition (ou « l'éclatement ») des photons reçus, les zones d'entrée ZEj peuvent, par exemple, comprendre un collimateur ou une lentille de fresnel ou encore un réflecteur intégré.

Il est important de noter, comme illustré sur la figure 1, qu'une zone d'entrée ZEj ne répartit pas forcément les photons, qu'elle reçoit de la diode électroluminescentes Dj associée, dans des première ZS1 et seconde ZS2 zones de sortie voisines et associées, du fait de son secteur angulaire SAj prédéfini. En effet, au moins une zone d'entrée ZEj peut répartir tous les photons, qu'elle reçoit de la diode électroluminescentes Dj associée, dans la première zone de sortie ZS1 associée. En fait, les zones de sortie qui reçoivent les photons issus d'une zone d'entrée ZEj sont fonction de l'amplitude du secteur angulaire SAj de cette dernière (ZEj) et de l'éloignement de ce secteur angulaire SAj par rapport à la seconde zone de sortie ZS2.

Par ailleurs, au moins deux des zones d'entrée ZEj peuvent être agencées pour répartir les photons qu'elles reçoivent dans des secteurs angulaires SAj prédéfinis différents. Dans ce cas, la zone d'entrée ZEj qui est située à une extrémité d'une zone d'alimentation ZA (ici ZE4), elle-même située en regard d'une extrémité E12 d'une première zone de sortie ZS1 située à côté d'une seconde zone de sortie ZS2, offre une répartition dans un secteur angulaire SAj (ici SA4) qui est plus grand que le secteur angulaire SAj-1 (ici SA3) de la zone d'entrée ZEj-1 voisine (ici ZE3). Cette option est particulièrement bien adaptée au cas, illustré, dans lequel la dimension de la seconde zone de sortie ZS2 suivant la direction transversale Y est notablement plus grande que la dimension de la première zone de sortie ZS1 suivant cette même direction transversale Y et/ou dans lequel on cherche à obtenir une décroissance très rapide de l'intensité lumineuse dans la seconde zone de sortie ZS2. C'est notamment le cas dans l'exemple non limitatif illustré où :
- la première zone d'entrée ZE1 répartit tous les photons reçus de la première diode électroluminescente D1 dans la première zone de sortie ZS1 du fait que son premier secteur angulaire SA1 est petit et couvre une région qui est très éloignée de la seconde zone de sortie ZS2,
- la deuxième zone d'entrée ZE2 répartit tous les photons reçus de la deuxième diode électroluminescente D2 dans la première zone de sortie ZS1 du fait que son deuxième secteur angulaire SA2 est petit et couvre une région qui est éloignée de la seconde zone de sortie ZS2,
- la troisième zone d'entrée ZE3 répartit tous les photons reçus de la troisième diode électroluminescente D3 à la fois dans la première zone de sortie ZS1 et dans la seconde zone de sortie ZS2 du fait que son troisième secteur angulaire SA3 est moyen et couvre une région qui est à cheval sur les première ZS1 et seconde ZS2 zones de sortie, et
- la quatrième zone d'entrée ZE4 répartit tous les photons reçus de la troisième diode électroluminescente D4 à la fois dans la première zone de sortie ZS1 et dans la seconde zone de sortie ZS2 du fait que son quatrième secteur angulaire SA4 est grand et couvre une région qui est à cheval sur les première ZS1 et seconde ZS2 zones de sortie.

On notera que les secteurs angulaires SAj prédéfinis peuvent être propres à induire une intensité maximale constante au niveau de la première zone de sortie ZS1. C'est notamment le cas dans l'exemple non limitatif illustré sur les figures 1 et 2. Mais cela n'est pas obligatoire. En effet, on pourrait envisager d'avoir une intensité lumineuse décroissante ou bien croissante entre les deux extrémités E11 et E12 d'une première zone de sortie ZS1. On comprendra en effet que l'obtention d'une intensité lumineuse constante ou bien croissante ou décroissante dépend de l'amplitude des différents secteurs angulaires SAj qui couvrent seulement la première zone de sortie ZS1 et du taux de recouvrement entre ces secteurs angulaires SAj au niveau de la première zone de sortie ZS1.

La bande lumineuse BL obtenue sur la face de sortie FS de l'exemple de réalisation de dispositif d'éclairage DE illustré sur la figure 1 et conforme aux paragraphes qui précèdent est schématiquement illustré sur la figure 2. Comme on peut le constater, dans cet exemple l'intensité lumineuse est sensiblement constante dans toute la première zone de sortie ZS1, tandis que l'intensité lumineuse décroit très rapidement à partir de l'extrémité E12 de la première zone de sortie ZS1 (et donc de l'extrémité E21 de la seconde zone de sortie ZS2).

On notera également que l'une au moins des première ZS1 et seconde ZS2 zones de sortie peut comprendre des facettes propres à éclater en sous-faisceaux un faisceau constitué de photons guidés jusqu'à elle(s) pour améliorer l'homogénéité lumineuse ou concentrer des photons guidés, par exemple dans le but d'obtenir des valeurs photométriques qui sont difficiles à atteindre.

On notera également que l'une au moins des première ZS1 et seconde ZS2 zones de sortie peut comprendre un grainage propre à homogénéiser un faisceau constitué des photons délivrés à l'extérieur.

L'invention offre plusieurs avantages, parmi lesquels :
- elle permet de réduire notablement le nombre de diodes électroluminescentes, et ainsi de réduire le poids, l'encombrement, la consommation électrique, et les possibilités de panne,
- elle permet de n'avoir à définir des zones d'entrée pour les photons qu'au niveau de la (chaque) zone d'alimentation locale, et non pas sur toute la face d'entrée comme c'est le cas dans les dispositifs de l'art antérieur,
- elle peut permettre de s'affranchir de la diversité de diodes électroluminescentes, et donc d'éviter les interversions lors du montage.

## Revendications

1. Dispositif d'éclairage (DE) comprenant au moins deux diodes électroluminescentes (Dj) propres à générer des photons et un guide de lumière (GL) de type plat et comportant une partie de guidage (PG) placée entre des faces d'entrée (FE) et de sortie (FS), ladite face d'entrée (FE) étant propre à alimenter en photons générés ladite partie de guidage (PG) et ladite face de sortie (FS) étant propre à délivrer à l'extérieur des photons guidés dans ladite partie de guidage (PG), **caractérisé en ce que** la face d'entrée (FE) comporte au moins une zone d'alimentation (ZA) dans laquelle lesdites diodes électroluminescentes (Dj) sont toutes localisées et placées en regard respectivement de zones d'entrée (ZEj), définies dans la zone d'alimentation (ZA) de ladite face d'entrée (FE) ; ladite zone d'alimentation (ZA) étant située en regard d'une unique première zone de sortie (ZS1) de ladite face de sortie (FS), et **en ce que** la face d'entrée (FE) comporte une zone (ZR) de la face d'entrée (FE) qui est située à côté de la zone d'alimentation (ZA) locale et devant laquelle n'est installée aucune diode électroluminescente, lesdites diodes (Dj) étant en outre agencées pour répartir les photons reçus respectivement dans des secteurs angulaires (SAj) prédéfinis afin d'induire sur une seconde zone de sortie (ZS2) de ladite face de sortie (FS), située à côté de ladite première zone de sortie (ZS1), une intensité lumineuse décroissante à partir de ladite première zone de sortie (ZS1).

2. Dispositif selon la revendication 1, **caractérisé en ce qu'**au moins deux desdites zones d'entrée (ZEj) sont agencées pour répartir les photons qu'elles reçoivent dans des secteurs angulaires (SAj) prédéfinis différents, une zone d'entrée (ZE4), située à une extrémité d'une zone d'alimentation (ZA), elle-même située en regard d'une extrémité d'une première zone de sortie (ZS1) située à côté d'une seconde zone de sortie (ZS2), offrant une répartition dans un secteur angulaire (SA4) plus grand que le secteur angulaire (SA3) de la zone d'entrée (ZE3) voisine.

3. Dispositif selon l'une des revendications 1 et 2, **caractérisé en ce que** lesdits secteurs angulaires (SAj) prédéfinis sont propres à induire une intensité maximale constante au niveau de ladite première zone de sortie (ZS1).

4. Dispositif selon l'une des revendications 1 à 3, **caractérisé en ce que** l'une au moins desdites première (ZS1) et seconde (ZS2) zones de sortie comprend des facettes propres à éclater en sous-faisceaux un faisceau constitué de photons guidés pour améliorer une homogénéité lumineuse ou concentrer des photons guidés.

5. Dispositif selon l'une des revendications 1 à 4, **caractérisé en ce que** l'une au moins desdites première (ZS1) et seconde (ZS2) zones de sortie comprend un grainage propre à homogénéiser un faisceau constitué des photons délivrés à l'extérieur.

6. Dispositif selon l'une des revendications 1 à 5, **caractérisé en ce que** lesdites diodes électroluminescentes (Dj) sont identiques et propres à délivrer une même intensité lumineuse.

7. Dispositif selon l'une des revendications 1 à 6, **caractérisé en ce que** lesdites diodes électroluminescentes (Dj) sont de type organique.

8. Dispositif selon l'une des revendications 1 à 7, **caractérisé en ce que** ledit guide de lumière (GL) est réalisé en polycarbonate ou en poly-méthacrylate de méthyle.

9. Bloc optique (BO) de véhicule, **caractérisé en ce qu'**il comprend au moins un dispositif d'éclairage (DE) selon l'une des revendications précédentes.

10. Véhicule, **caractérisé en ce qu'**il comprend au moins un bloc optique (BO) selon la revendication 9 et/ou au moins un dispositif d'éclairage (DE) selon l'une des revendications 1 à 8.

## Patentansprüche

1. Beleuchtungsvorrichtung (DE) mit mindestens zwei Leuchtdioden (Dj), die geeignet sind, Photonen zu erzeugen, und einem Lichtleiter (GL) vom flachen Typ und mit einem Führungsteil (PG), der zwischen einer Eingangsseite (FE) und einer Ausgangsseite (FS) angeordnet ist, wobei die Eingangsseite (FE) geeignet ist, den Führungsteil (PG) mit erzeugten Photonen zu versorgen, und die Ausgangsseite (FS) geeignet ist, die in dem Führungsteil (PG) geführten Photonen nach außen abzugeben, **dadurch gekennzeichnet, dass** die Eingangsseite (FE) mindestens eine Versorgungszone (ZA) umfasst, in der die Leuchtdioden (Dj) alle lokalisiert und jeweils gegenüber von Eingangszonen (ZEj) angeordnet sind, die in der Versorgungszone (ZA) der Eingangsseite (FE) definiert sind ; wobei die Versorgungszone (ZA) gegenüber einer einzigen ersten Ausgangszone (ZS1) der Ausgangsseite (FS) angeordnet ist, und dass die Eingangsseite (FE) eine Zone (ZR) der Eingangsseite (FE) umfasst, die neben der lokalen Versorgungszone (ZA) angeordnet ist und vor der keine Leuchtdiode installiert ist, wobei die Dioden (Dj) außerdem so angeordnet sind, dass sie die jeweils empfangenen Photonen in vordefinierten Winkelsektoren (SAj) verteilen, um auf einem zweiten Ausgangsbereich (ZS2) der Ausgangsfläche (FS), der sich neben dem ersten Ausgangsbereich (ZS1) befindet, eine von dem ersten Ausgangsbereich (ZS1) aus abnehmende Lichtintensität zu induzieren.

2. . Vorrichtung nach Anspruch 1, **dadurch gekennzeichnet, dass** mindestens zwei der Eingangsbereiche (ZEj) so angeordnet sind, dass sie die Photonen, die sie empfangen, in unterschiedliche vordefinierte Winkelsektoren (SAj) verteilen, wobei ein Eingangsbereich (ZE4), der sich an einem Ende eines Versorgungsbereichs (ZA) befindet, selbst gegenüber einem Ende einer ersten Ausgangszone (ZS1) liegt, die neben einer zweiten Ausgangszone (ZS2) liegt und eine Verteilung in einem Winkelsektor (SA4) anbietet, der größer ist als der Winkelsektor (SA3) der benachbarten Eingangszone (ZE3).

3. . Vorrichtung nach einem der Ansprüche 1 oder 2, **dadurch gekennzeichnet, dass** die vordefinierten Winkelsektoren (SAj) geeignet sind, eine konstante maximale Intensität an der ersten Austrittszone (ZS1) zu induzieren.

4. . Vorrichtung nach einem der Ansprüche 1 bis 3, **dadurch gekennzeichnet, dass** mindestens einer der ersten (ZS1) und zweiten (ZS2) Austrittsbereiche Facetten umfasst, die geeignet sind, einen aus geführten Photonen bestehenden Strahl in Teilstrahlen aufzubrechen, um eine Lichthomogenität zu verbessern oder geführte Photonen zu bündeln.

5. . Vorrichtung nach einem der Ansprüche 1 bis 4, **dadurch gekennzeichnet, dass** mindestens eine der ersten (ZS1) und zweiten (ZS2) Austrittszonen eine Körnung umfasst, die geeignet ist, einen Strahl zu homogenisieren, der aus den nach außen gelieferten Photonen besteht.

6. . Vorrichtung nach einem der Ansprüche 1 bis 5, **dadurch gekennzeichnet, dass** die Leuchtdioden (Dj) identisch und geeignet sind, eine gleiche Lichtintensität zu liefern.

7. . Vorrichtung nach einem der Ansprüche 1 bis 6, **dadurch gekennzeichnet, dass** die Leuchtdioden (Dj) vom organischen Typ sind.

8. . Vorrichtung nach einem der Ansprüche 1 bis 7, **dadurch gekennzeichnet, dass** der Lichtleiter (GL) aus Polycarbonat oder Polymethylmethacrylat hergestellt ist.

9. . Optische Einheit (BO) eines Fahrzeugs, **dadurch gekennzeichnet, dass** sie mindestens eine Beleuchtungsvorrichtung (DE) nach einem der vorhergehenden Ansprüche umfasst.

10. . Fahrzeug, **dadurch gekennzeichnet, dass** es mindestens eine optische Einheit (BO) nach Anspruch 9 und/oder mindestens eine Beleuchtungsvorrichtung (DE) nach einem der Ansprüche 1 bis 8 umfasst.

## Claims

1. Illumination device (DE) comprising at least two light-emitting diodes (Dj) suitable for generating photons and a light guide (GL) of the flat type and including a guide part (PG) placed between input (FE) and output (FS) faces, the said input face (FE) being suitable for supplying the said guide part (PG) with generated photons and the said output face (FS) being suitable for delivering to the outside photons guided in the said guide part (PG) **characterized in that** the input face (FE) comprises at least one supply zone (ZA) in which said light-emitting diodes (Dj) are all located and placed opposite respective input zones (ZEj), defined in the supply zone (ZA) of said input face (FE) ; said supply zone (ZA) being located opposite a single first output zone (ZS1) of said output face (FS), and **in that** the input face (FE) comprises a zone (ZR) of the input face (FE) which is located next to the local supply zone (ZA) and in front of which no light-emitting diodes are installed said diodes (Dj) being furthermore arranged to distribute the received photons respectively in predefined angular sectors (SAj) in order to induce on a second output zone (ZS2) of said output face (FS), located next to said first output zone (ZS1), a decreasing light intensity from said first output zone (ZS1).

2. Device according to claim 1, **characterized in that** at least two of said input zones (ZEj) are arranged to distribute the photons they receive in different predefined angular sectors (SAj), an input zone (ZE4), located at one end of a supply zone (ZA) itself located opposite one end of a first output zone (ZS1) located next to a second output zone (ZS2), offering a distribution in a larger angular sector (SA4) than the angular sector (SA3) of the neighboring input zone (ZE3).

3. Device according to one of claims 1 and 2, **characterized in that** said predefined angular sectors (SAj) are suitable to induce a constant maximum intensity at said first output zone (ZS1).

4. Device according to one of the claims 1 to 3, **characterized in that** at least one of said first (ZS1) and second (ZS2) output zones comprises facets suitable for splitting into sub-beams a beam constituted by guided photons to improve a luminous homogeneity or to concentrate guided photons.

5. Device according to one of claims 1 to 4, **characterized in that** at least one of said first (ZS1) and second (ZS2) output zones comprises a graining suitable for homogenizing a beam consisting of externally delivered photons.

6. Device according to one of the claims 1 to 5, **characterized in that** said light-emitting diodes (Dj) are identical and suitable for delivering the same light intensity.

7. Device according to one of claims 1 to 6, **characterized in that** said light-emitting diodes (Dj) are of organic type.

8. Device according to one of claims 1 to 7, **characterized in that** said light guide (GL) is made of polycarbonate or poly-methyl methacrylate.

9. Vehicle optical unit (BO), **characterized in that** it comprises at least one lighting device (DE) according to one of the preceding claims.

10. Vehicle, **characterized in that** it comprises at least one optical unit (BO) according to claim 9 and/or at least one lighting device (DE) according to one of claims 1 to 8.
